# EUROPEAN PATENT APPLICATION

(11) **EP 1 788 572 A1**
(43) Date of publication of application: **23.05.2007**
(21) Application number: 05767234.7
(22) Date of filing: 28.07.2005
(51) Int. Cl.: G11B 27/10, G11B 20/10, G11B 27/00, H04N 5/91

(54) **INFORMATION RECORDING DEVICE, INFORMATION RECORDING PROGRAM, MEDIUM WITH RECORDED INFORMATION RECORDING PROGRAM, RECORDING MEDIUM, INFORMATION RECORDING METHOD, INFORMATION REPRODUCING DEVICE, INFORMATION REPRODUCING METHOD, INFORMATION REPRODUCING PROGRAM, AND MEDIUM WITH RECORDED INFORMATION REPRODUCING PROGRAMM**

(30) Priority: 03.08.2004 JP 2004227144
(71) Applicant: SHARP KABUSHIKI KAISHA, Osaka-shi, Osaka 545-8522 (JP)
(72) Inventor: KIYAMA, Jiro, Osaka-shi, Osaka 545-8522 (JP); KIZUKI, Hideaki, Osaka-shi, Osaka 545-8522 (JP); OHIZUMI, Katsushi, Osaka-shi, Osaka 545-8522 (JP)
(74) Representative: Brown, Kenneth Richard
(86) International application number: PCT/JP2005/013803
(87) International publication number: WO 2006/013767

(57) **Abstract**

A recording control section controls recording, on an optical disc, of a video TS and an audio TS, each of which is composed of plural pieces of partial data, and a ClipInfo creating section creates a time-address conversion table for the video TS and a time-address conversion table for the audio TS. The ClipInfo creating section sets a value of a relative address field of the time-address conversion table for the audio TS to a value of the relative address of partial data having a minimum time stamp that is larger than a value of a time stamp field of the time-address conversion table for the corresponding video TS. Thus, it is possible to provide an information recording apparatus which, in the case of recording on a recording medium plural pieces of stream data which should be reproduced in sync with each other at least partially, can reduce the amount of memory used at the time of reproduction of the stream data.

## Description

### TECHNICAL FIELD

The present invention relates to (i) an information recording apparatus which records plural pieces of stream data, such as video data and sub data, on a recording medium, such as an optical disc, (ii) an information reproducing apparatus which reproduces plural pieces of the stream data from the recording medium recorded by the information recording apparatus, (iii) information recording/ reproducing methods, (iv) information recording/reproducing programs, etc.

### BACKGROUND ART

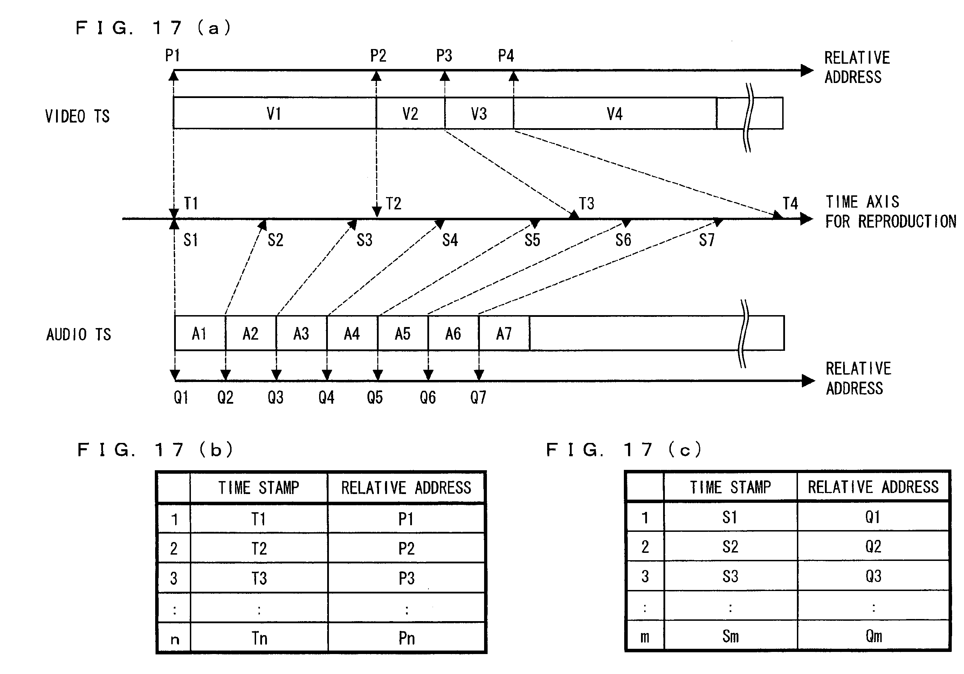

As the density and transfer rate of an optical disc increase, recording HD (High Definition) images on an optical disc is becoming common. Moreover, also suggested is a recording apparatus having a function, as an added value of a HD image recording function, of simultaneously recording, on an optical disc, both (i) video data composed of HD image data and primary audio data and (ii) AV data (for example, another audio or another image broadcasted simultaneously, hereinafter referred to as "sub data") different from the video data. A reproducing apparatus which reproduces the optical disc recorded as above can reproduce the video data and the sub data in sync with each other. One example of realizing such recording/reproducing processes is an information processing apparatus disclosed in Japanese Unexamined Patent Publication No.2002-157859 (Tokukai 2002-157859, published on May 31, 2002). The following will briefly explain this conventional technology in reference to Figures 17(a) to 17(c).

First, the following will explain the structure of the stream data used in the conventional technology. The video data and the sub data are recorded on the optical disc in the MPEG-2 TS (Transport Stream) format. The video data of the MPEG-2 TS (hereinafter referred to as "video TS") is structured such that the HD image compressed in the MPEG-2 video format and the primary audio compressed in the AC-3 format are multiplexed. The sub data of the MPEG-2 TS (hereinafter referred to as "audio TS") is structured such that the secondary audio compressed in the same AC-3 format as the primary audio is multiplexed.

Next, the following will explain management information regarding a stream. The data format of each of the video TS and the audio TS is such that the reproducing time and the amount of data are not proportional to each other. Therefore, in order to realize accurate random access reproduction and special reproduction, a time-address conversion table is recorded on the optical disc. This table stores combinations of (i) time stamps (Presentation Time Stamp) of points (decode start point) where decode can be started and (ii) relative addresses from the beginning of the TS data.

In an example shown in Figure 17(a), assuming that beginnings of respective pieces of partial data V1, V2, V3 and V4 of the video TS are the decode start points. Then, the time-address conversion table shown in Figure 17(b) is obtained when the time stamps indicating the respective decode start points are T1, T2, T3 and T4, and the relative addresses from the beginning are P1, P2, P3 and P4. Similarly, regarding the audio TS, the time-address conversion table shown in Figure 17(c) is obtained.

When reproducing these video TS and audio TS in sync with each other, corresponding data are read out using the time-address conversion tables shown in Figures 17(b) and 17(c), and when decoding/outputting, adjustment of timings is carried out using the time stamps given to the video TS and the audio TS.

However, in order to reproduce the video TS and the audio TS in sync with each other in the above conventional technology, it is necessary to load both the time-address conversion table for the video TS and the time-address conversion table for the audio TS. That is, the problem is that the amount of memory for temporarily storing the time-address conversion tables becomes large.

Moreover, when the optical disc recording the audio TS as the sub data is edited by an apparatus which cannot carry out recording/reproducing/editing of the sub data, and the video TS is partially deleted, mismatch occurs at reproduction zones of the video TS and the audio TS which should be reproduced in sync with each other. In this case, an apparatus which can carry out recording/ reproducing/ editing of the sub data needs to delete a zone of the audio TS which zone corresponds to the deleted zone of the video TS. However, the problem is that a complicated process is required to retrieve the corresponding zone by current techniques.

### DISCLOSURE OF INVENTION

The present invention was made to solve the above problems, and an object of the present invention is to provide (i) an information recording apparatus, (ii) an information recording program, (iii) a recording medium recording the information recording program, (iv) a recording medium, (v) an information recording method, (vi) an information reproducing apparatus, (vii) an information reproducing method, (viii) an information reproducing program, and (ix) a recording medium recording the information reproducing program, each of which, in the case of recording on a recording medium plural pieces of stream data which pieces should be reproduced in sync with each other at least partially, can reduce the amount of memory used when reproducing the stream data.

In order to solve the above problems, an information recording apparatus of the present invention is an information recording apparatus including a recording section which records information on a recording medium, the information recording apparatus including: data recording control means for controlling recording, on the recording medium, of stream data composed of plural pieces of partial data; and table recording control means for controlling recording, on the recording medium, of tables each showing a combination of (i) a reproducing time list showing timings for reproducing respective pieces of the partial data and (ii) specific information for specifying the partial data corresponding to respective reproducing times in the reproducing time list, and in a case where the data recording control means controls recording, on the recording medium, of plural pieces of the stream data which pieces should be reproduced in sync with each other at least partially, the table recording control means controls recording, on the recording medium, of the tables corresponding to respective pieces of the stream data in such a state that the reproducing time lists in the tables corresponding to at least two pieces of the stream data are identical with each other.

Moreover, a recording medium of the present invention is a recording medium recording: stream data composed of plural pieces of partial data; and tables each showing a combination of (i) a reproducing time list showing timings for reproducing respective pieces of the partial data and (ii) specific information for specifying the partial data corresponding to respective reproducing times in the reproducing time list, and in a case of recording plural pieces of the stream data which pieces should be reproduced in sync with each other at least partially, the tables corresponding to respective pieces of the stream data are recorded in such a state that the reproducing time lists in the tables corresponding to at least two pieces of the stream data are identical with each other.

Moreover, an information recording method of the present invention is an information recording method for recording information on a recording medium, the information recording method including: a data recording step of recording, on the recording medium, stream data composed of plural pieces of partial data; and a table recording step of recording, on the recording medium, tables each showing a combination of (i) a reproducing time list showing timings for reproducing respective pieces of the partial data and (ii) specific information for specifying the partial data corresponding to respective reproducing times in the reproducing time list, and in a case of, in the data recording step, recording, on the recording medium, plural pieces of the stream data which pieces should be reproduced in sync with each other at least partially, the tables corresponding to respective pieces of the stream data are recorded in the table recording step in such a state that the reproducing time lists in the tables corresponding to at least two pieces of the stream data are identical with each other.

According to the above configurations and method, when plural pieces of the stream data and the tables corresponding to respective pieces of the stream data are recorded on the recording medium, the reproducing time lists in the tables corresponding to at least two pieces of the stream data are identical with each other. When reproducing the recording medium recorded as above, the tables corresponding to respective pieces of the stream data are loaded in the memory. Here, by utilizing the reproducing time lists being identical with each other, it is possible to reduce the amount of memory used.

Specifically, for example, if the table corresponding to first stream data is loaded in the memory, only the specific information of the table corresponding to second stream data may be loaded. That is, it is not necessary to load the reproducing time list of the table corresponding to the second stream data. Therefore, it is possible to reduce the amount of memory used at the time of reproduction.

Moreover, for example, when an editing process is carried out by a noncompliant device which can carry out only the editing process with respect to one piece of stream data, the problem is that, as described above, contents of the tables corresponding to plural pieces of the stream data which pieces should be reproduced in sync with each other become different from each other. In contrast, according to the above configuration, the reproducing time lists in the tables corresponding to at least two pieces of the stream data are identical with each other. Therefore, by confirming whether or not the reproducing time lists are identical with each other, it is possible to easily detect that the editing process is carried out by the noncompliant device.

Moreover, an information reproducing apparatus of the present invention is an information reproducing apparatus including a reproducing section which reproduces information recorded on a recording medium, the information reproducing apparatus including: data reproducing control means for controlling readout, from the recording medium by the reproducing section, of stream data composed of plural pieces of partial data; and table reproducing control means for controlling (I) readout, from the recording medium by the reproducing section, of tables each showing a combination of (i) a reproducing time list showing timings for reproducing respective pieces of the partial data and (ii) specific information for specifying the partial data corresponding to respective reproducing times in the reproducing time list, and (II) storing of the tables in a memory, and in a case where the data reproducing control means controls readout, from the recording medium, of plural pieces of the stream data which pieces should be reproduced in sync with each other at least partially, and when the table reproducing control means reads out the tables, corresponding to at least two pieces of the stream data, whose reproducing time lists are identical with each other, the table reproducing control means stores, in a memory, the reproducing time list corresponding to one piece of the stream data but does not store the reproducing time list corresponding to a remaining piece of the stream data.

Moreover, an information reproducing method of the present invention is an information reproducing method for reproducing information recorded on a recording medium, the information reproducing method including: a data reproducing step of reading out, from the recording medium, stream data composed of plural pieces of partial data; and a table step of (I) reading out, from the recording medium, tables each showing a combination of (i) a reproducing time list showing timings for reproducing respective pieces of the partial data and (ii) specific information for specifying the partial data corresponding to respective reproducing times in the reproducing time list, and (II) storing the tables in a memory, and in a case of, in the data reproducing step, reading out, from the recording medium, plural pieces of the stream data which pieces should be reproduced in sync with each other at least partially, and when, in the table reproducing step, reading out the tables, corresponding to at least two pieces of the stream data, whose reproducing time lists are identical with each other, the reproducing time list corresponding to one piece of the stream data is stored in a memory but the reproducing time list corresponding to a remaining piece of the stream data is not stored in the memory.

According to the above configuration and method, when reproducing the recording medium recording the reproducing time lists in the tables corresponding to at least two pieces of the stream data being identical with each other, the tables corresponding to respective pieces of the stream data are loaded in the memory. Here, by utilizing the reproducing time lists being identical with each other, it is possible to reduce the amount of memory used.

Specifically, for example, if the table corresponding to first stream data is loaded in the memory, only the specific information of the table corresponding to second stream data may be loaded. That is, it is not necessary to load the reproducing time list of the table corresponding to the second stream data. Therefore, it is possible to reduce the amount of memory used at the time of reproduction.

### BRIEF DESCRIPTION OF DRAWINGS

Figure 1 is a block diagram showing a functional configuration of a control section included in a video disc recorder of one embodiment of the present invention.
Figure 2 is a block diagram showing a schematic configuration of the video disc recorder.
Figure 3 is a block diagram showing a schematic configuration of a recording section included in the video disc recorder.
Figure 4 is a block diagram showing a schematic configuration of a reproducing section included in the video disc recorder.
Figure 5(a) is a diagram showing an arrangement of data recorded on an optical disc, Figure 5(b) is a diagram showing an arrangement of data of a stream area, and Figure 5(c) is a diagram showing an arrangement of data of a management information area.
Figure 6(a) is a diagram showing an example of a data structure of PlayList, and Figure 6(b) is a table showing an example of PlayList data.
Figure 7 is a diagram showing a data structure of Cliplnformation.
Figure 8(a) is a diagram showing one example of the relative addresses and reproducing times of respective data blocks in the video TS as the video data and in the audio TS as the sub data, Figure 8(b) is a table showing one example of a time-address conversion table for the video TS, and Figure 8(c) is a table showing one example of a time-address conversion table for the audio TS.
Figure 9 is a diagram showing an example of a file directory structure for managing streams and management information.
Figure 10 is a flow chart showing a flow of a reproducing process.
Figure 11 is a flow chart showing a flow of a PlayItem reproducing process.
Figure 12 is a flow chart showing a flow of a recording process.
Figure 13 is a flow chart showing a flow of a process of creating ClipInformation for the video TS.
Figure 14 is a flow chart showing a flow of a process of creating Cliplnformation for the audio TS.
Figure 15 is a flow chart showing a flow of a matching process.
Figure 16 is a flow chart showing a flow of a process of grasping the status of a mismatch.
Figure 17(a) is a diagram showing one example of the relative addresses and reproducing times of respective data blocks in the video TS as the video data and in the audio TS as the sub data, Figure 17(b) is a table showing one example of a conventional time-address conversion table for the video TS, and Figure 17(c) is a table showing one example of a conventional time-address conversion table for the audio TS.

### BEST MODE FOR CARRYING OUT THE INVENTION

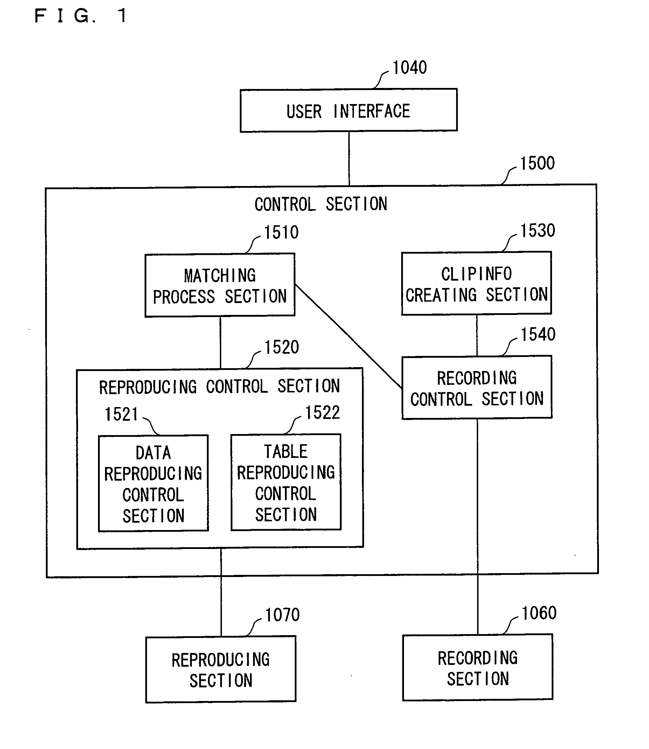

The following will explain one embodiment of the present invention in reference to Figures 1 to 16.

### (System Configuration)

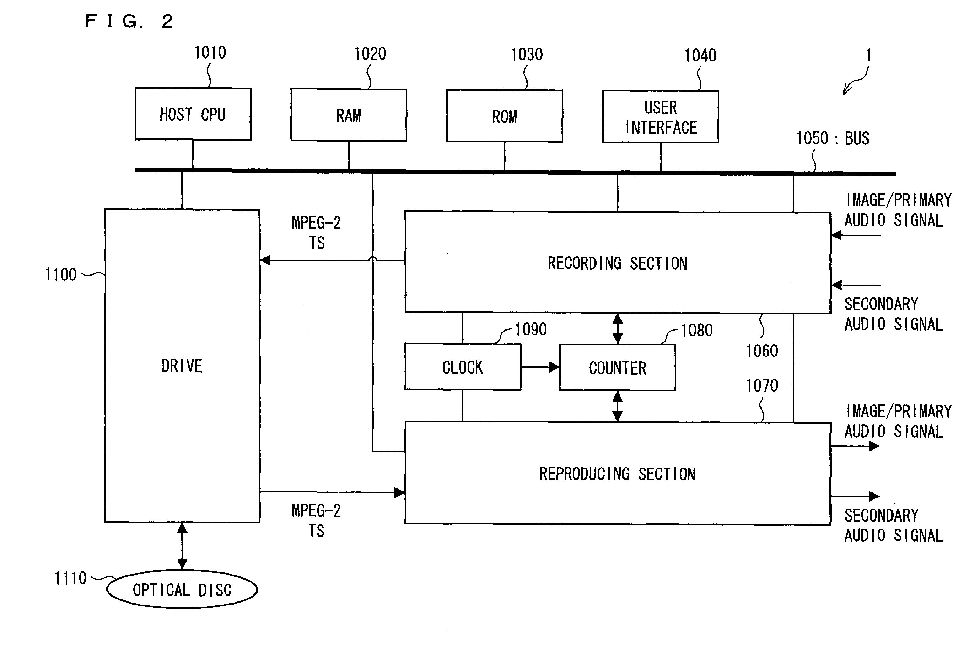

Figure 2 shows a basic system configuration of a video disc recorder (information recording apparatus, information reproducing apparatus) 1 of the present embodiment. As shown in Figure 2, the video disc recorder 1 includes a host CPU 1010, a RAM 1020, a ROM 1030, a user interface 1040, a bus 1050, a recording section 1060, a reproducing section 1070, a counter 1080, a clock 1090, and a drive 1100.

The host CPU 1010 is a CPU (Central Processing Unit) which executes a control process of operations in the video disc recorder 1. The RAM 1020 is a RAM (Random Access Memory) which functions as a work memory when the host CPU 1010 carries out a computation process. The ROM 1030 is a ROM (Read Only Memory) which stores various programs and data used for the control process. That is, when the control process is executed, the RAM' 1020 loads the program(s) stored in the ROM 1030, and the host CPU 1010 executes the program(s).

Figure 1 shows, as a functional configuration, the control process realized by the computation process by the host CPU 1010. Here, a control section 1500 is assumed to be a component which executes the control process realized by the host CPU 1010. Then, the control section 1500 includes a matching process section 1510, a reproducing control section 1520, a ClipInfo creating section 1530, and a recording control section 1540.

The reproducing control section 1520 is a block which controls a reproducing process in the reproducing section 1070. This reproducing control section 1520 includes a data reproducing control section (data reproducing control means) 1521 which controls the reproducing process of the stream data and a table reproducing control section (table reproducing control means) 1522 which controls the reproducing process of ClipInformation (will be described later). The matching process section 1510 is a block which carries out a matching process (will be described later). The recording control section (data recording control means) 1540 is a block which controls a recording process in the recording section 1060. The ClipInfo creating section (table recording control means) 1530 is a block which carries out a ClipInformation creating process (will be described later). Details of the processes in these functional blocks will be described later. Note that the control section 1500 may be composed of a hardware logic, such as ASIC.

The user interface 1040 is an interface which accepts an instruction input from a user. This user interface 1040 is realized by, for example, (i) various buttons provided on the surface of the video disc recorder 1 or (ii) a remote controller. Note that the user interface 1040 may be realized by a GUI (Graphical User Interface) using a display screen image of a display apparatus connected to the video disc recorder 1, and is not limited to the display apparatus but may be realized by any terminal apparatus.

The drive 1100 carries out the recording process and reproducing process with respect to an optical disc (recording medium) 1110.

The recording section 1060 encodes a image/primary audio signal and a secondary audio signal inputted externally, multiplexes these signals into a MPEG-2 TS (hereinafter referred to as "TS"), and transmits it to the drive 1100. Moreover, the reproducing section 1070 decodes the TS transmitted from the drive 1100, and outputs the image/primary audio signal and the secondary audio signal. Note that details of the recording section 1060 and the reproducing section 1070 will be described later.

The counter 1080 provides, to the recording section 1060 and the reproducing section 1070, time information used (i) for giving the time stamp for synchronization to the stream data in the recording section 1060 and (ii) for controlling an output timing of the stream data in the reproducing section 1070. The clock 1090 generates a clock signal used in the processes in the recording section 1060 and the reproducing section 1070, and also generates a- clock signal used for count-up of the counter 1080.

In the above configuration, the host CPU 1010, the RAM 1020, the ROM 1030, the user interface 1040, the recording section 1060, the reproducing section 1070, and the drive 1100 are connected to the bus 1050. That is, the instruction input from the user accepted by the user interface 1040 is transferred via the bus 1050 to the host CPU 1010, and the recording section 1060, the reproducing section 1070, and the drive 1100 operate in response to the control based on the computation of the host CPU 1010.

### (Recording Section)

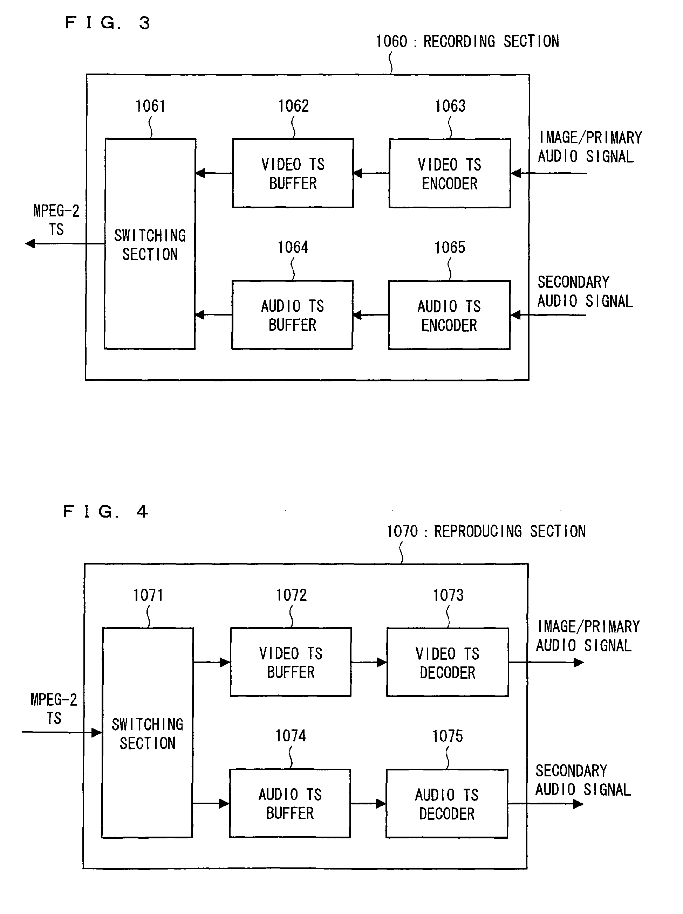

Next, the following will explain the configuration of the recording section 1060 in reference to Figure 3. As shown in Figure 3, the recording section 1060 includes a switching section 1061, a video TS buffer 1062, a video TS encoder 1063, an audio TS buffer 1064, and an audio TS encoder 1065.

The image/primary audio signal inputted is encoded by the video TS encoder 1063 into the TS, and is transmitted to the video TS buffer 1062 as a video TS (stream data). Similarly, the secondary audio signal inputted is encoded by the audio TS encoder 1065 into the TS, and is transmitted to the audio TS buffer 1064 as an audio TS (stream data). Both the video TS buffer 1062 and the audio TS buffer 1064 operate as FIFO (First In First Out). The switching section 1061 switches a source of data transmitted to the drive 1100 between the video TS buffer 1062 and the audio TS buffer 1064 in accordance with the control from the host CPU 1010.

### (Reproducing Section)

Next, the following will explain the configuration of the reproducing section 1070 in reference to Figure 4. As shown in Figure 4, the reproducing section 1070 includes a switching section 1071, a video TS buffer 1072, a video TS decoder 1073, an audio TS buffer 1074, and an audio TS decoder 1075.

In accordance with a command from the host CPU 1010, the switching section 1071 switches between the video TS buffer 1072 and the audio TS buffer 1074 and transmits the TS transmitted from the optical disc 1110. Both the video TS buffer 1072 and the audio TS buffer 1074 operate as FIFO. The video TS decoder 1073 and the audio TS decoder 1075 decode the video TS and the audio TS, respectively, and output the image/primary audio signal and the secondary audio signal, respectively. When decoding, the video TS decoder 1073 and the audio TS decoder 1075 load, according to need, the video TS and the audio TS from the video TS buffer 1072 and the audio TS buffer 1074, respectively.

Note that timings for decoding and outputting of the video TS decoder 1073 and the audio TS decoder 1075 are determined based on the time stamps given to respective access units in the loaded TS. Specifically, the video TS decoder 1073 and the audio TS decoder 1075 monitor a value of the counter 1080 all the time, and decode/output the access unit when the value of the counter 1080 coincides with the time stamp.

Moreover, the host CPU 1010 sets an initial value and a final value of the counter 1080 at the start of reproduction of the TS. Among the access units read out from the video TS buffer 1072 and the audio TS buffer 1074, the video TS decoder 1073 and the audio TS decoder 1075 decode and output only the access unit(s) which has the time stamp of the initial value or more but less than the final value, and do not read the other access unit(s). Note that among the access units each having the time stamp of less than the initial value or more than the final value, the video TS decoder 1073 decodes the access unit(s) (I·P picture) which is necessary for decoding the access unit having the time stamp of the initial value or more but less than the final value.

### (Data Arrangement)

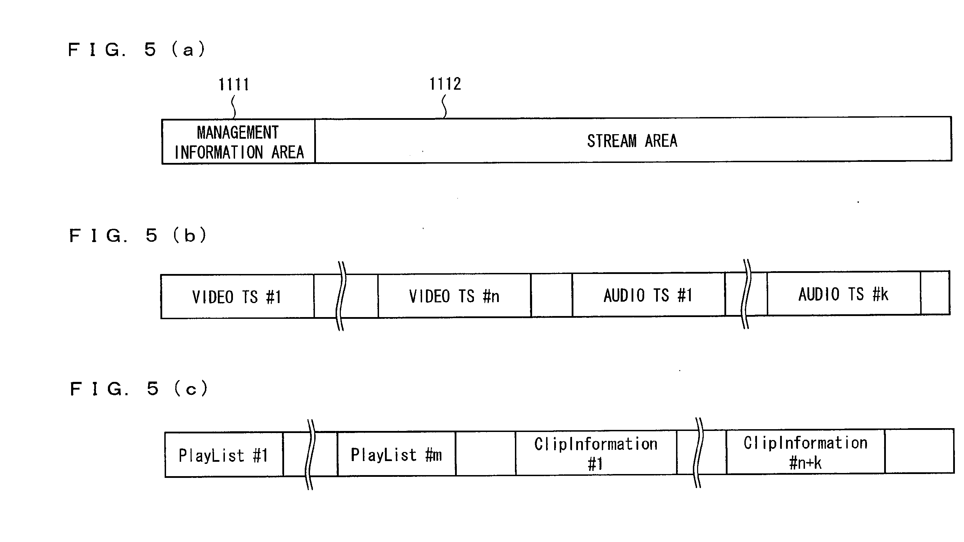

Next, the following will explain the arrangement of data recorded on the optical disc 1110. As shown in Figure 5(a), the optical disc 1110 is composed of a management information area 1111 for recording the management information and a stream area 1112 for recording the TS.

As shown in Figure 5(b), the stream area 1112 records the video TS (#1 to #n) that is the encoded image/primary audio and the audio TS (#1 to #k) that is the encoded secondary audio. One video TS and one audio TS are recorded every time recording is carried out.

As shown in Figure 5(c), the management information area 1111 records PlayList (#1 to #m) for storing play list information and ClipInformation (#1 to #n+k) for storing information regarding the TS. The ClipInformation is created so as to correspond to each of the audio TS and the video TS recorded in the stream area 1112. A corresponding combination of the TS and the Cliplnformation is referred to as "Clip".

The video TS is obtained by multiplexing the image data compressed in the MPEG-2 video format and the primary audio data compressed in the AC-3 format into the MPEG-2 TS. Meanwhile, the audio TS is obtained by multiplexing the secondary audio data compressed in the AC-3 format into the MPEG-2 TS.

### (Data Structure of Management Information)

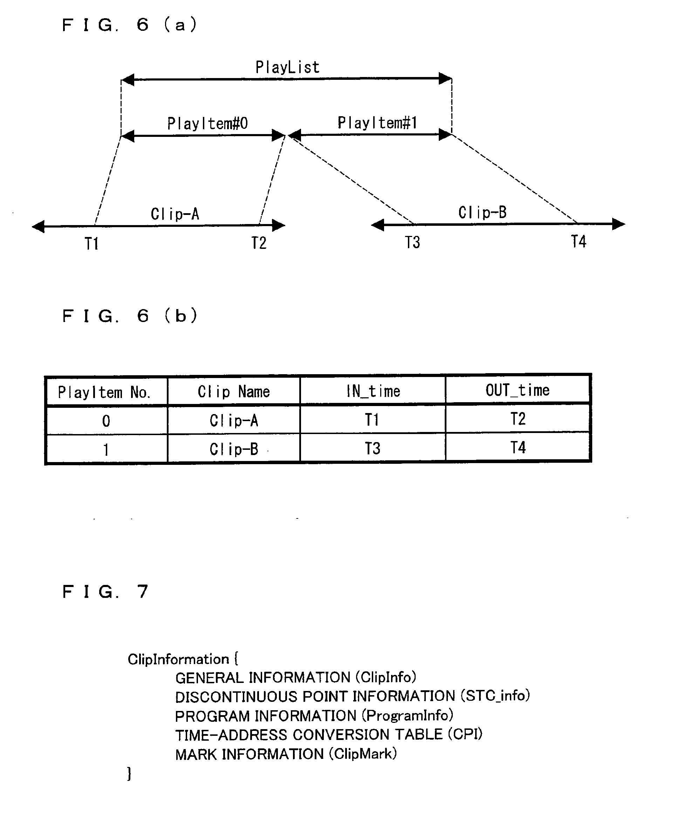

Next, the following will explain the data structure of the PlayList in reference to Figures 6(a) and 6(b). The PlayList is information for managing an order of reproduction in an arbitrary zone of an arbitrary Clip, and each zone is managed using a unit called "PlayItem". A starting point (IN_time) and end point (OUT_time) of each zone are specified by the time stamps (PTS: Presentation Time Stamp) given to the Clip. For example, as shown in Figure 6(a), when the PlayList is created such that the Clip-A that is a zone from T1 to T2 is reproduced and then the Clip-B that is a zone from T3 to T4 is reproduced, data of this PlayList becomes one shown in Figure 6(b).

Next, the following will explain the data structure of the Cliplnformation in reference to Figure 7. The Cliplnformation is composed of general information (Cliplnfo), discontinuous point information (STC_info), program information (ProgramInfo), a time-address conversion table (CPI), and mark information (ClipMark).

The ClipInfo stores attribute information (for example, a bit rate) regarding the entire corresponding TS. The STC_info stores information regarding discontinuous points of the time stamps in the corresponding TS. The ProgramInfo stores (i) attribute information (for example, resolution) regarding ES (Elementary Stream), such as video data and audio data included in the TS data and (ii) information of relationship between the ESs. The CPI will be described later. The ClipMark stores bookmark information.

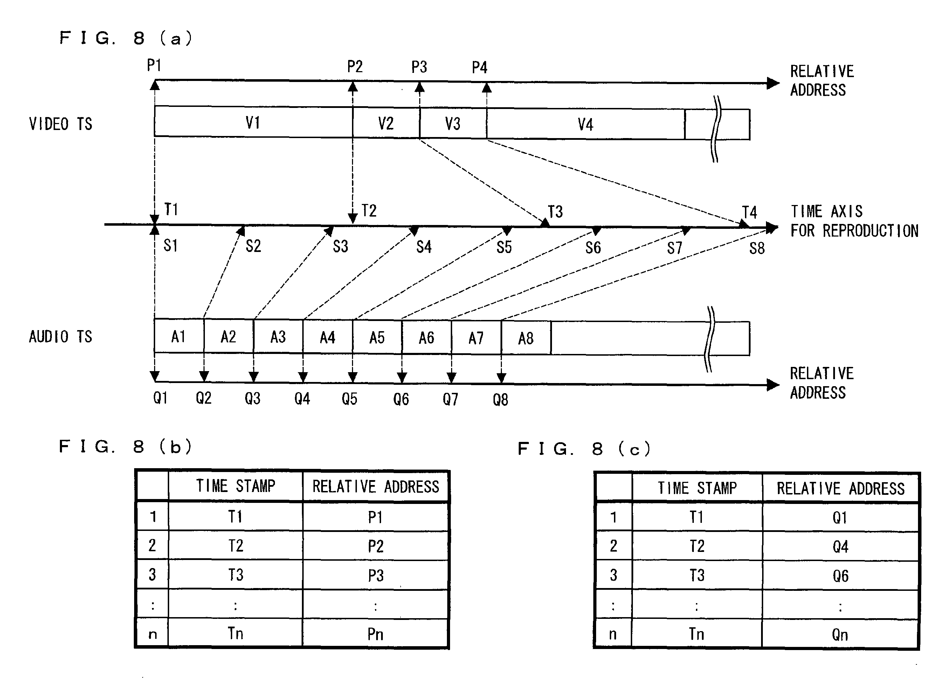

Next, the following will explain the time-address conversion table in reference to Figures 8(a) to 8(c). Figure 8(a) shows one example of the relative addresses and reproducing times of respective data blocks in the video TS as the video data and in the audio TS as the sub data. Moreover, Figure 8(b) shows one example of the time-address conversion table for the video TS, and Figure 8(c) shows one example of the time-address conversion table for the audio TS.

In an example shown in Figure 8(a), beginnings of respective pieces of partial data V1, V2, V3 and V4 of the video TS are decode start points. Then, the time stamps indicating respective decode start points are T1, T2, T3 and T4, and relative addresses from the beginning are P1, P2, P3 and P4. Similarly, beginnings of respective pieces of partial data A1 to A8 of the audio TS are decode start points. Then, the time stamps indicating respective decode start points are S1 to S8, and relative addresses from the beginning are Q1 to Q8.

Note that Figures 8(a) and 8(b) are the same as Figures 17(a) and 17(b) used in BACKGROUND ART to explain the time-address conversion table, and only Figure 8(c) is different. That is, a method for setting values of the time-address conversion table for the audio TS in the present embodiment is different from that in

### BACKGROUND ART.

Specifically, the time-address conversion table for the audio TS is set as follows. First, (1) the number of entries in the time-address conversion table for the audio TS is identical with that in the time-address conversion table for the video TS. Moreover, (2) field values (reproducing times) of the time stamps in the time-address conversion table for the audio TS are also identical with those in the time-address conversion table for the video TS. Further, (3) each of values in relative address fields in the time-address conversion table for the audio TS is set to the value of the relative address (specific information) of the partial data having the minimum time stamp that is larger than the value of the corresponding time stamp field (reproducing time list) in the time-address conversion table for the corresponding video TS.

The following will explain the above (3) using, as an example, a time stamp T2 in Figure 8(a). T2 is the time stamp of the partial data V2 of the video TS. First, a time stamp that is more than T2 but is minimum is retrieved from the audio TS. In the case of an example shown in Figure 8(a), S4 is detected. Next, the relative address corresponding to S4 is retrieved from the audio TS. In this way, Q4 is detected. Therefore, a combination of T2 and Q4 is registered in a second entry in Figure 8(c).

By causing the time-address conversion table for the audio TS to have the above attributes (1), (2) and (3), it is possible to reduce the amount of memory used at the time of reproduction and simplify mismatch handling, as described below.

Note that the time stamps in the time-address conversion table for the audio TS do not correspond to the time stamps given to the audio TS. However, only about several tens of milliseconds which correspond to one audio frame (the partial data of the audio TS) lack at a beginning portion. This does not affect the synchronization, and the influence by this lacking is acoustically negligible.

Note that in the above example, the partial data A4 of the audio TS is reproduced from S4 correctly, not from T2. This is because S4 is given to A4 as the time stamp, and the audio TS decoder 1075 checks the time stamp, and outputs A4 when the counter 1080 is S4. Therefore, the audio output is not carried out in a period from T2 to S4.

### (File Directory Structure)

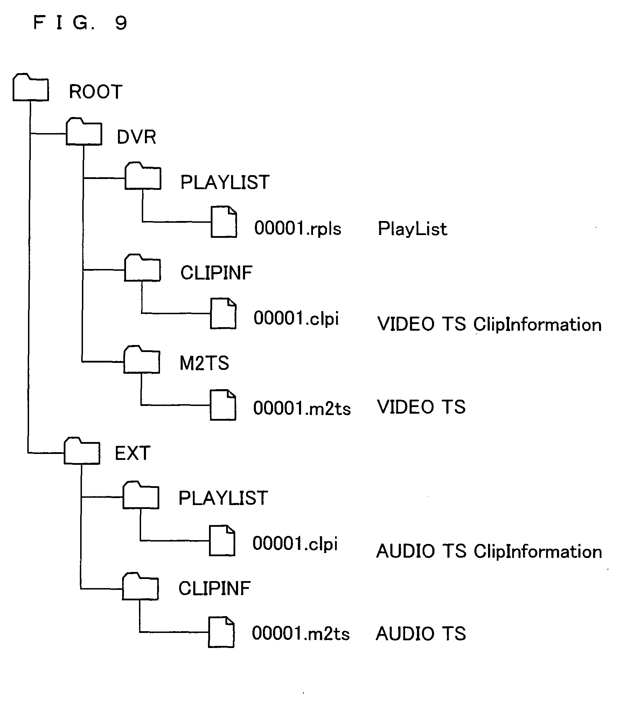

The following will explain a file directory structure for managing the above streams and management information in reference to Figure 9. Each of the streams and management information is recorded as an individual file. The file name of each file is composed of a basic portion and an extension. A file type is distinguishable by the extension. For example, as the extension, m2ts is given to a TS file, clpi is given to a ClipInformation file, and rp1s is given to a PlayList file.

These files are stored in different directories depending on the file type. For example, the PlayList file is stored in a /DVR/PLAYLIST directory, the ClipInformation for the video TS is stored in a /DVR/CLIPINF directory, the video TS file is stored in a /DVR/M2TS directory, the audio TS file is stored in a /EXT/M2TS directory, and the ClipInformation for the audio TS is stored in a /EXT/CLPI directory.

Moreover, in order to clarify the correspondence between the TS and the ClipInformation, the basic portions of the file names of the corresponding TS and ClipInformation are in common with each other. Moreover, the basic portion of the file name of the audio TS recorded at the same time as the video TS is also in common with that of this video TS, in order to clarify the correspondence.

### (Reproducing Process)

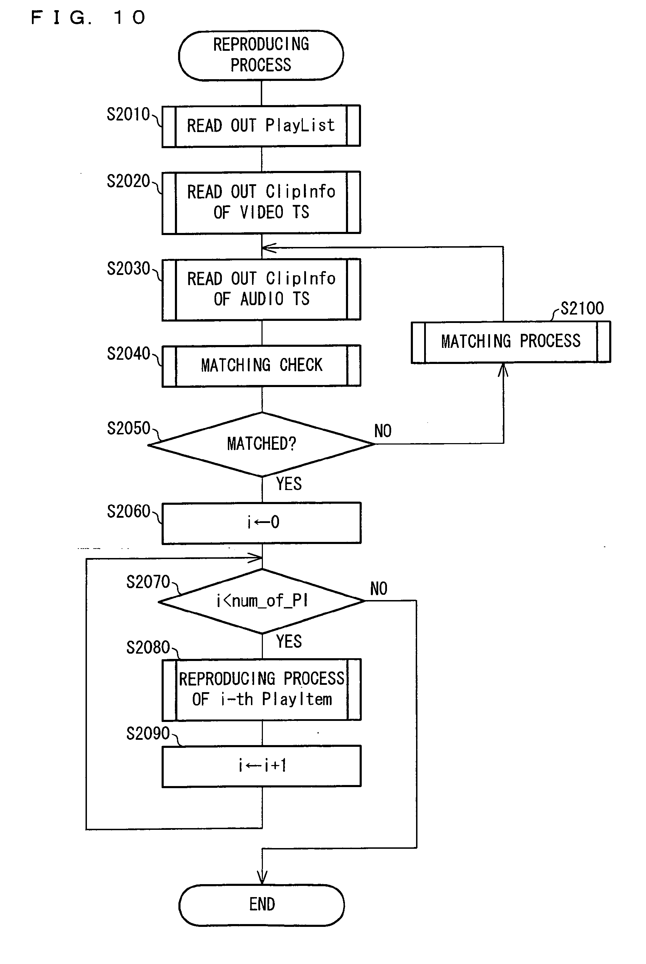

The following will explain the reproducing process of the disc video recorder of the present embodiment in reference to the flow chart shown in Figure 10. Assuming that an instruction of reproducing a specific play list is inputted by a user via the user interface 1040. Note that the following process(es) is executed by the table reproducing control section 1522 of the reproducing control section 1520 of the control section 1500, unless otherwise noted.

First, the content of the PlayList file corresponding to the play list appointed by the user is read out from the optical disc 1110 by the drive 1100, and is written in the RAM 1020 (Step 2010, hereinafter referred to as "S2010"). Then, by analyzing the PlayItem contained in the read-out PlayList, the ClipInformation file to be read out is specified. Based on this result, a necessary ClipInformation file for the video TS is read out from the optical disc 1110, and is written in the RAM 1020 (S2020).

Next, whether the audio TS corresponding to the read-out Cliplnformation file for the video TS is recorded on the optical disc 1110 or not is retrieved. Specifically, whether a file having the same file name as the read-out Cliplnformation file for the video TS is stored in the EXT_CLPI directory of the optical disc 1110 or not is retrieved.

If there is the audio TS corresponding to the read-out Cliplnformation file for the video TS, the ClipInformation file is written in the RAM 1020 (S2030). Here, only the fields of the relative addresses of the time-address conversion table are written in the RAM 1020, but the fields of the time stamps of the time-address conversion table are not written in the RAM 1020. This is because it is not necessary to store the fields of the time stamps since the fields of the time stamps are identical with those of the time-address conversion table for the video TS. This is realized by a feature of the present invention, that is "(2) field values of the time stamps are also identical with field values of the time stamps in the time-address conversion table for the video TS".

Next, the matching process section 1510 carries out a matching check between the time-address conversion table for the video TS and the time-address conversion table for the audio TS (S2040). The reason why this matching check is carried out is as follows. Generally, among devices which carry out recording and editing processes with respect to the optical disc 1110, there are some devices (noncompliant devices) which do not recognize the audio TS as the sub data. When such a noncompliant device carries out the recording or editing process with respect to the optical disc 1110, a process of deleting, partially deleting or inserting only the video TS may be carried out. If such a process is carried out, there is a possibility that the time stamps of the video TS and the time stamps of the audio TS differ from each other. That is, the above matching check is carried out to check whether there is the difference between the time stamps of the video TS and the time stamps of the audio TS or not.

A specific process of the matching check is to compare the number of entries in the time-address conversion table for the video TS with the number of entries in the time-address conversion table for the audio TS. Here, assuming that the number of entries in the time-address conversion table for the video TS changes when the noncompliant device carries out the recording or editing process. Here, the decode start point of the video TS is generally from about 0.5 second to 1 second. Therefore, if the recording or editing process is carried out, there is a high possibility that the number of entries changes.

Then, in S2050, the matching process section 1510 determines whether they are matched with each other or not. If No in S2050, that is, if the matching process section 1510 determines that they are not matched with each other, the matching process section 1510 carries out the matching process (S2100). Note that the matching process will be described later.

Meanwhile, if Yes in S2050, that is, if the matching process section 1510 determines that they are matched with each other, the PlayItem reproducing process is carried out in the order of the PlayItems included in the PlayList (S2060 to S2090). First, in S2060, 0 is stored in a variable i. Next, in S2070, whether i is smaller than the number of PlayItems (num_of_PI) or not is determined. If No in S2070, that is, if i is equal to or larger than the number of PlayItems, the process terminates. If Yes in S2070, that is, if i is smaller than the number of PlayItems, the reproducing process of an i-th PlayItem is carried out in S2080 by the reproducing section 1070 on the basis of an instruction of the data reproducing control section 1521. Then, the variable i is incremented in S2090, and the process returns to S2070.

In order to cause the reproducing section 1070 to carry out the reproducing process of the PlayItem, a PlayItem reproduction command generated by the data reproducing control section 1521 includes information regarding the name of the Clip corresponding to the PlayItem, the starting point (IN_time) of the reproduction zone, and the end point (OUT_time) of the reproduction zone. Moreover, there are the PlayItem reproducing process for the video TS and the PlayItem reproducing process for the audio TS, and these processes are separate tasks. Here, the PlayItem reproducing process for the video TS and the PlayItem reproducing process for the audio TS are spuriously carried out in parallel.

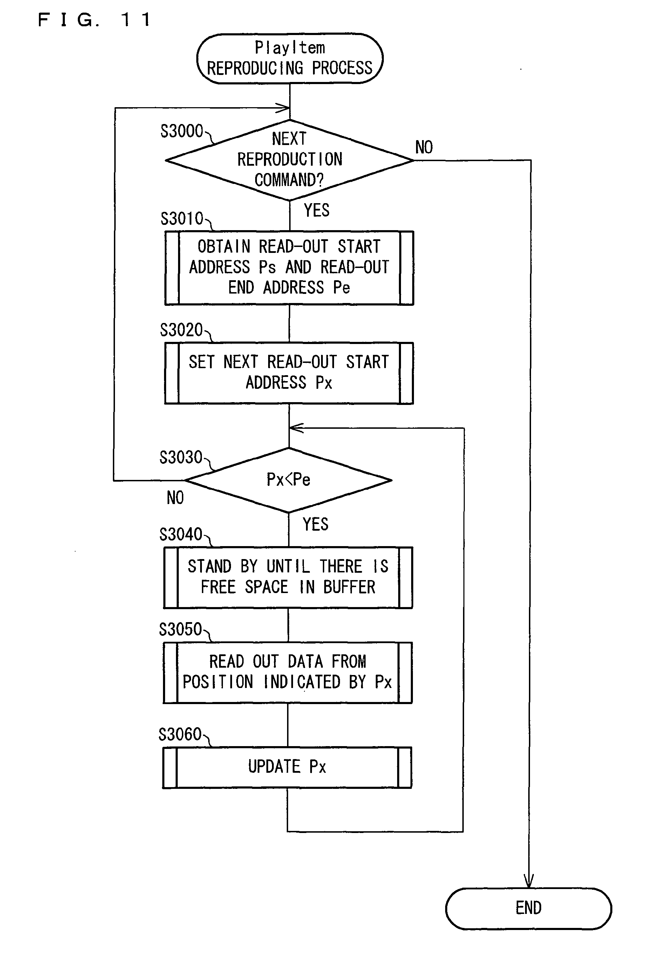

The following will explain the PlayItem reproducing process in the reproducing section 1070 in reference to Figure 11. First, in S3000, whether the PlayItem reproduction command is output from the data reproducing control section 1521 or not is determined. If No in S3000, that is, if the PlayItem reproduction command is not output, the process terminates.

Meanwhile, if Yes in S3000, that is, if the PlayItem reproduction command is detected, the table reproducing control section 1522 obtains the name of the Clip, the IN_time and the OUT_time. Then, the table reproducing control section 1522 refers to the time-address conversion table for the video TS corresponding to the Clip and the time-address conversion table for the audio TS corresponding to the Clip, so as to retrieve a read-out start address Ps and read-out end address Pe of the TS (S3010). Moreover, here, the IN_time and the OUT_time are transmitted from the data reproducing control section 1521 to the reproducing section 1070 as the initial value and the final value.

Next, the Ps is set as an initial value of the read-out start address Px (S3020), and the video TS and audio TS appointed by the name of the Clip are sequentially loaded by buffers until the Px reaches the Pe (S3030 to S3060) (the video TS is loaded by the video TS buffer 1072, and the audio TS is loaded by the audio TS buffer 1074).

Specifically, first, in S3030, whether the Px is smaller than the Pe or not is determined. If No in S3030, that is, if the Px is equal to or larger than the Pe, the reproducing process carried out in accordance with the PlayItem reproduction command is considered to be terminated, and the process returns to S3000. Meanwhile, if Yes in S3030, that is, if the Px is smaller than the Pe, the process stands by in S3040 until there is a free space in the buffer. When there is the free space in the buffer, data is read out from the address indicated by the Px, and the reproducing section 1070 carries out the reproducing process (S3050). Then, in S3060, the time-address conversion table is referred, the Px is updated to the next value, and the process returns to S3030.

### (Recording Process)

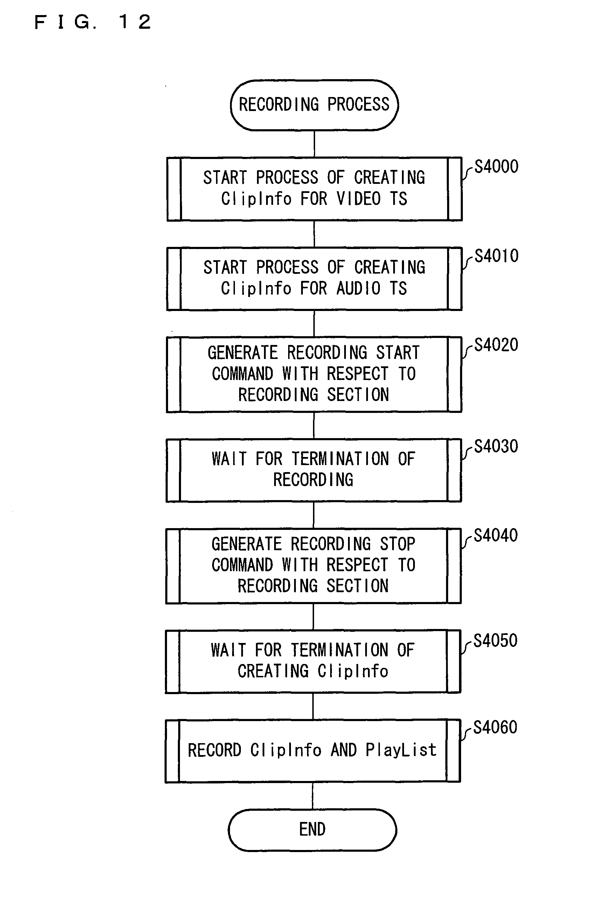

The following will explain the recording process of the disc video recorder of the present embodiment in reference to the flow chart shown in Figure 12. Assuming that accepted from the user via the user interface 1040 is such an instruction that the image/primary audio signal and secondary audio signal inputted to the recording section 1060 is recorded on the optical disc 1110. Note that the following process is carried out by the recording control section 1540 of the control section 1500, unless otherwise noted.

First, the ClipInfo creating section 1530 starts a task for creating the ClipInformation for the video TS to be recorded and a task for creating the ClipInformation for the audio TS to be recorded (S4000 and S4010). In S4000, the ClipInfo creating section 1530 starts the creating process of the ClipInformation for the video TS. Then, in S4010, the Cliplnfo creating section 1530 starts the creating process of the ClipInformation for the audio TS. Moreover, although not shown, the video TS buffer 1062 and the audio TS buffer 1064 are monitored, and the recording control section 1540 starts a task of carrying out recording on the optical disc 1110, depending on the amount of buffer remaining.

Then, a recording start command is generated with respect to the recording section 1060 (S4020), and the process stands by until (i) there is an instruction of stopping recording from the user or (ii) the recording stops due to, for example, the shortage of capacity of the optical disc 1110 (S4030). When the instruction of stopping recording is detected, a recording stop command is generated with respect to the recording section 1060 (S4040).

Then, the completion of creating the ClipInformation by the ClipInfo creating section 1530 is waited (S4050), and the ClipInformation and the PlayList are recorded on the optical disc 1110 (S4060).

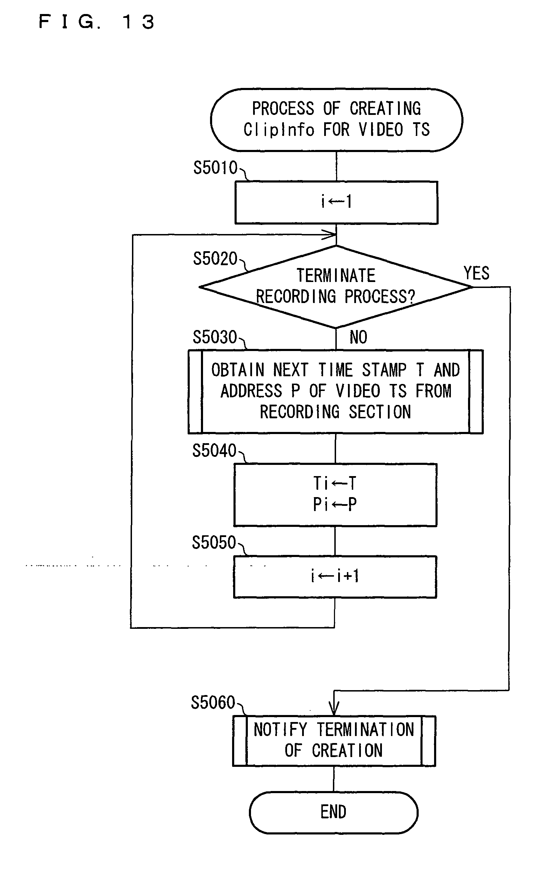

Next, the following will explain the process of creating the ClipInformation for the video TS by the ClipInfo creating section 1530 in reference to the flow chart shown in Figure 13. First, in S5010, 1 is stored in the variable i. Next, in S5020, whether the recording section 1060 terminates the recording process or not is confirmed. If Yes in S5020, that is, if the recording process terminates, the termination of the process of creating the ClipInformation for the video TS is notified in S5060. Thus, the process terminates.

Meanwhile, if No in S5020, that is, if the recording process is not terminated, a time stamp T and relative address P of the next partial data in the video TS are obtained from the recording section 1060 (S5030). The obtained time stamp T and relative address P are added as Ti and Pi in the i-th entry of the time-address conversion table for the video TS (S5040). Then, the variable i is incremented in S5050, and the process returns to S5020.

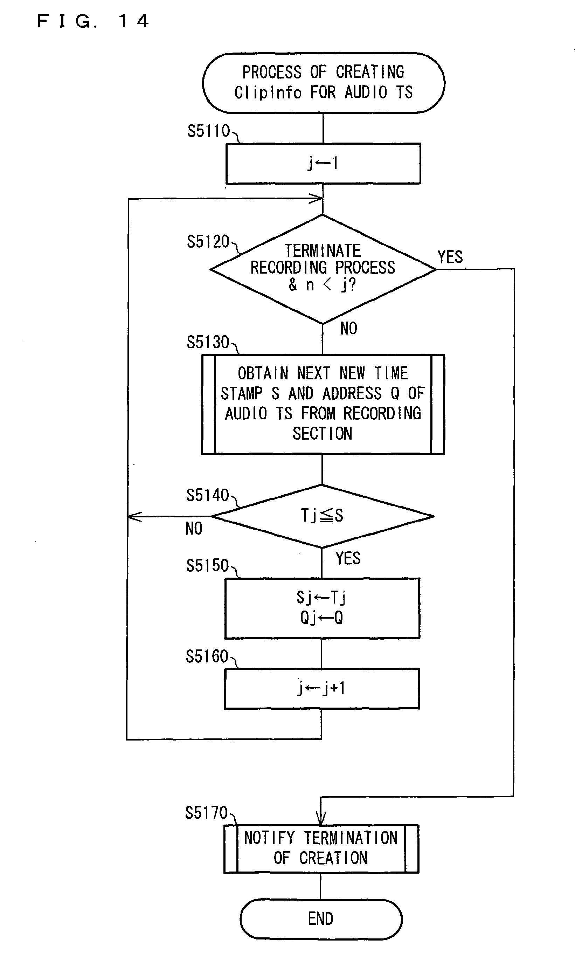

Next, the following will explain the process of creating the ClipInformation for the audio TS by the ClipInfo creating section 1530 in reference to the flow chart shown in Figure 14. First, in S5110, 1 is stored in a variable j. Next, in S5120, whether (i) the recording section 1060 terminates the recording process or not and (ii) j is smaller than n that is the number of entries in the time-address conversion table for the video TS or not is determined. If Yes in S5120, that is, if the recording process terminates and j is equal to or more than n, the termination of the process of creating the ClipInformation for the audio TS is notified in S5170. Thus, the process terminates.

Meanwhile, if No in S5120, that is, if the recording process is not terminated or j is smaller than n, a time stamp S and address Q of the next partial data in the audio TS are obtained from the recording section 1060 (S5130). Then, in S5140, whether the obtained time stamp S is equal to or more than Tj that is a j-th time stamp in the time-address conversion table for the video TS or not is determined. If No in S5140, that is, if S is smaller than Tj, the process returns to 55120.

Meanwhile, if Yes in S5140, that is, if S is equal to or more than Tj, Tj and Q are registered as the j-th entry in the time-address conversion table for the audio TS (S5150). Then, j is incremented (S5160), and the process returns to S5120. By the process described above, the time-address conversion table for the audio TS shown in Figure 8(c) is created.

### (Matching Process)

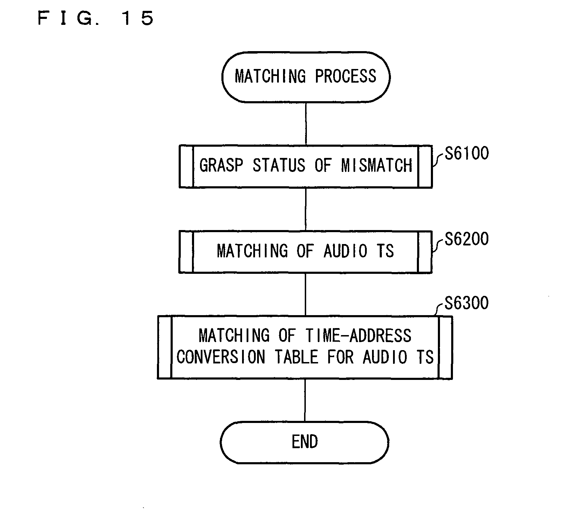

Next, the following will explain the matching process carried out by the matching process section 1510 in reference to the flow chart shown in Figure 15. Assuming that the number of entries in the time-address conversion table for the video TS changes when the noncompliant device carries out the recording or editing process.

First, in S6100, a process of grasping the status of a mismatch between the audio TS and the video TS is carried out. Next, the matching process between the audio TS and the video TS is carried out (S6200). Finally, the matching process between the time-address conversion table for the audio TS and the time-address conversion table for the video TS is carried out (S6300).

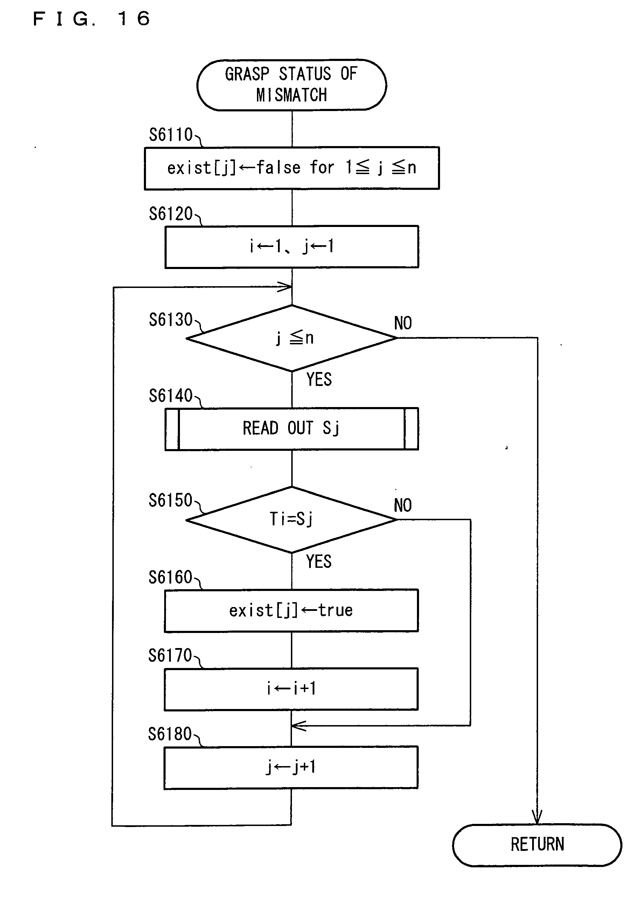

Here, the following will explain the process of grasping the status of the mismatch between the audio TS and the video TS in S6100 in reference to the flow chart shown in Figure 16. First, a flag exist indicating whether there is the video data corresponding to each entry in the time-address conversion table for the audio TS or not is initialized (S6110). Next, i and j which are pointers to the entries in the time-address conversion table for the video TS and the time-address conversion table for the audio TS are initialized to 1, respectively (S6120).

Next, the following process is carried out for all the entries in the time-address conversion table for the audio TS. First, whether j is equal to or less than n or not is determined in S6130. If No in S6130, that is, if j is more than n, the process of grasping the status of the mismatch terminates.

Meanwhile, if Yes in S6130, that is, if j is equal to or less than n, the j-th entry in the time-address conversion table for the audio TS is first read out from the optical disc 1110 in S6140. The reason why this process is carried out is because in order to save a use space of the RAM 1020, a time stamp Sj of the j-th entry of the audio TS which is necessary in the next step is not stored in the RAM 1020. Such an additional readout of data may cause interruption of the reproduction when this readout is carried out during the reproduction. However, this readout does not cause any problem since the real time property is not required during the matching process.

Next, whether the Sj read out in S6140 is identical with the i-th time stamp Ti in the time-address conversion table for the video TS or not is determined (S6150). If No in S6150, that is, if it is determined that the Sj is not identical with the Ti, j is incremented in S6180, and the process returns to S6130.

Meanwhile, if Yes in S6150, that is, if it is determined that the Sj is identical with the Ti, a corresponding flag exist [j] is put up (S6160). Then, i and j are incremented in S6170 and S6180, and the process returns to S6130.

Based on the value of this flag exist, the matching process of the audio TS in S6200 and the matching process of the time-address conversion table for the audio TS in S6300 are carried out. Specifically, the audio TS corresponding to the entry whose flag is not put up is deleted, and the entry itself is also deleted. This matching process is realized in such a manner that (i) the matching process section 1510 gives an instruction of changing the time-address conversion table for the audio TS with respect to the recording control section 1540, and (ii) based on this, the recording control section 1540 gives an instruction of carrying out a record change process with respect to the recording section 1060.

As above, by a feature of the present invention, that is, "(2) field values of the time stamps are also identical with field values of the time stamps in the time-address conversion table for the video TS", it is possible to eliminate the mismatch by the above simple algorithm.

### (Variations)

In the above embodiment, the mismatch status grasping process (S6100) in the matching process (S2100) is carried out after the mismatch is detected (S2040, S2050), however it may be carried out in the process (S2030) of reading out the Cliplnfomation of the audio TS in the reproducing process. Specifically, the mismatch status grasping process is carried out each time one entry in the time-address conversion table is read out. This means that the matching check (S2040) and the mismatch status grasping (S6100) are simultaneously carried out in the process (S2030) of reading out the ClipInfomation of the audio TS.

In this case, since the matching check is carried out each time one entry of the time-address conversion table is read out, the difference between the time stamp of the video TS and the time stamp of the audio TS can be detected. Therefore, it is possible to detect the mismatch even when the editing by the noncompliant device does not cause the change in the number of entries (for example, when a process of interchanging the first half and second half of the video TS is carried out).

Moreover, in the present embodiment, the reproducing time of the video TS and the reproducing time of the audio TS are assumed to be substantially identical with each other. However, the reproducing time of the audio TS may be shorter than the reproducing time of the video TS. That is, the audio TS corresponding to the video TS may be partially lacks. In this case, the number of entries in the time-address conversion table for the audio TS is set to be identical with that for the video TS, and data indicating that there is no data is stored in the relative address field of the entry in which there is no audio TS. Thus, it is possible to carry out the same process as the above embodiment.

Moreover, it is a premise of the present embodiment that the values of the time stamp fields in the time-address conversion table for the audio TS are identical with those for the corresponding video TS. However, there may be a case where those values are recorded without causing the values to be identical with each other. In this case, in order to distinguish this case from a case where the noncompliant device has carried out deletion, a flag indicating that the values are recorded by causing the values to be identical with each other is recorded in the ClipInformation for the audio TS. Thus, it is possible to avoid carrying out the matching process with respect to the audio TS which is recorded without causing the values to be identical with each other.

Moreover, in the present embodiment, the partial data registered in the time-address conversion table for the audio TS has a minimum time stamp that is equal to or larger than the time stamp of the corresponding video TS. However, this partial data may have a maximum time stamp that is equal to or less than the time stamp of the corresponding video TS.

Moreover, in the present embodiment, "(3) each of values in relative address fields is set to the value of the relative address of the partial data having a minimum time stamp that is larger than the value of the corresponding time stamp field". However, major effects of the present invention can be achieved even if the above (3) is not satisfied. For example, in the case where the value in the relative address field in the time-address conversion table for the audio TS is set to the value (which is called Tx here) of the relative address of the partial data having the time stamp that is larger than the value (which is called Tn here) of the corresponding time stamp field but is not minimum, and when the reproduction is started from the time Tn, the reproduction of the audio TS does not start until the time Tx, but both are accurately reproduced in sync with each other after the time Tx. That is, at the time of the reproduction from the time Tn, audio output lacks by (Tx - Tn) at the beginning.

Note that in the case where the value in the relative address field in the time-address conversion table for the audio TS is set to the value of the relative address of the partial data having the time stamp (which is called Ty here) that is smaller than the value (which is called Tm here) of the corresponding time stamp field, the audio TS from Ty to Tm is automatically skipped by the audio TS decoder 1075 by setting the initial value of the counter 1080 to Tm by the host CPU 1010 at the start of the reproduction. Therefore, the reproduction is carried out without any problems.

Moreover, in the present embodiment, the audio TS and the video TS use the same time axis (the same time stamps are given to data of the audio TS and data of the video TS, respectively, if these pieces of data is reproduced at the same time). However, different time axes may be used. In this case, the tables may be created on the basis that each time stamp of the audio TS is obtained by subtracting, from the value in the TS, the difference between the time axis of the audio TS and the time axis of the video TS. Here, by recording the value of the difference in the ClipInformation of the audio TS, it is possible to obtain an approximate value of the time stamp added in the TS.

Moreover, the present embodiment uses the optical disc 1110 as the recording medium. However, the present embodiment is not limited to this, and any recording medium can be used. For example, it is possible to use, as the recording medium, a hard disc, a flash memory, or the like.

Moreover, the present embodiment uses the image/primary audio and the secondary audio. However, the other combination (for example, an image and an image, an image and a graphics) may be used.

Moreover, the present embodiment uses the TS as the format of the stream data. However, a format (for example, PES stream, Program Stream) other than the TS may be used.

Moreover, the present embodiment shows an example in which two pieces of stream data that are the video TS and the audio TS are used as the stream data recorded on the optical disc 1110. However, three pieces or more of stream data may be recorded on the optical disc 1110. In this case, by causing the values of the time stamp fields in at least two pieces or more of stream data to be identical with each other, it is possible to reduce the amount of memory used at the time of reproduction and simplify the mismatch handling.

Note that, respective functional blocks and process steps of the control section 1500 of the above embodiment may be realized in such a manner that calculating means, such as a CPU, executes a program stored in memory means such as a ROM or a RAM and controls inputting means, such as a keyboard, outputting means, such as a display, and communicating means, such as an interface circuit. Therefore, various functions and processes of the control section 1500 of the present embodiment can be realized only by reading out the recording medium recording the program and executing the program by using a computer including the above means. Moreover, by recording the program on a removable recording medium, the above various functions and processes can be realized by any computer.

The recording medium may be a memory (not shown) for process steps on a microcomputer. For example, the program medium may be something like a ROM. Alternatively, the program medium may be such that a program reader device (not shown) as an external storage device may be provided in which a recording medium is inserted for reading.

In addition, in any case, the stored program is preferably executable on access by a microprocessor. Further, it is preferred if the program is retrieved, and the retrieved program is downloaded to a program storage area in a microcomputer to execute the program. The download program is stored in a main body device in advance.

In addition, the program medium may be a recording medium constructed separably from a main body. The medium may be tape based, such as a magnetic tape or cassette tape; disc based, such as a flexible disc or hard disk including a magnetic disc and CD/MO/MD/DVD; card based, such as an IC card (including a memory card); or a semiconductor memory, such as a mask ROM, EPROM (Erasable Programmable Read Only Memory), EEPROM (Electrically Erasable Programmable Read Only Memory), and a flash ROM. All these types of media hold the program in a fixed manner.

In contrast, if the system is arranged to connect to the Internet or another communication network, the medium is preferably a recording medium which holds the program in a flowing manner so that the program can be downloaded over the communication network.

Further, if the program is downloaded over a communication network in this manner, it is preferred that the download program is either stored in a main body device in advance or installed from another recording medium.

As above, an information recording apparatus of the present invention is an information recording apparatus including a recording section which records information on a recording medium, the information recording apparatus including: data recording control means for controlling recording, on the recording medium, of stream data composed of plural pieces of partial data; and table recording control means for controlling recording, on the recording medium, of tables each showing a combination of (i) a reproducing time list showing timings for reproducing respective pieces of the partial data and (ii) specific information for specifying the partial data corresponding to respective reproducing times in the reproducing time list, and in a case where the data recording control means controls recording, on the recording medium, of plural pieces of the stream data which pieces should be reproduced in sync with each other at least partially, the table recording control means controls recording, on the recording medium, of the tables corresponding to respective pieces of the stream data in such a state that the reproducing time lists in the tables corresponding to at least two pieces of the stream data are identical with each other.

Moreover, in the information recording apparatus of the present invention in the above configuration, in order that the reproducing time list in the table corresponding to one specific piece of the stream data is identical with the reproducing time list in the table corresponding to a remaining piece of the stream data, the table recording control means may set the reproducing time list in the table corresponding to the remaining piece of the stream data.

According to the above configuration, the table corresponding to one specific piece of the stream data is set to the reproducing time list corresponding to the above one specific piece of the stream data, whereas the reproducing time list of the table corresponding to the remaining piece of the stream data is set in accordance with the above one specific piece of the stream data. Therefore, it is possible to omit the process of adjusting the reproducing time list regarding the above one specific piece of the stream data. Thus, it is possible to simplify the process.

Moreover, in the information recording apparatus of the present invention in the above configuration, when the table recording control means sets the table corresponding to the remaining piece of the stream data, it may set, in the table, specific information for specifying, as the partial data corresponding to the reproducing times, the partial data which should be reproduced around the respective reproducing times in the reproducing time list of the table.

According to the above configuration, in the table corresponding to the stream data whose reproducing time list is adjusted, the partial data which should be reproduced around respective reproducing times in the reproducing time list are set as the partial data corresponding to the reproducing times. Thus, in the case of reproducing plural pieces of the stream data in sync with each other, and when switching respective reproducing times in the reproducing time list, it is possible to reduce the lacking of reproduction of the stream data whose reproducing time list is adjusted.

Moreover, in the above configuration, the information recording apparatus of the present invention further includes data information recording control means for controlling recording, on the recording medium, of data information regarding the stream data, and in a case where the table recording control means carries out a process of causing the reproducing time lists to be identical with each other and sets the tables when recording one certain piece of the stream data, the data information recording control means puts, in the data information corresponding to the stream data, information indicating that the process of causing the reproducing time lists to be identical with each other has been carried out.

According to the above configuration, the data information contains information indicating that the process of causing the reproducing time lists to be identical with each other has been carried out. Therefore, it is possible to distinguish between (i) the reproducing time lists recorded without causing these reproducing time lists to be identical with each other and (ii) the reproducing time lists being not identical with each other since these reproducing time lists are edited by the noncompliant device.

Moreover, in the information recording apparatus of the present invention in the above configuration, when the table recording control means sets the table corresponding to the stream data which does not contain the partial data corresponding to one specific reproducing time in the reproducing time lists which are caused to be identical with each other, it may set, as the specific information corresponding to the reproducing time, information indicating that there is no corresponding partial data.

According to the above configuration, even if stream data whose times for reproduction are different from each other are recorded in the recording medium, it is possible to cause the reproducing time lists in the tables corresponding to respective pieces of the stream data to be identical with each other.

The present invention is not limited to the description of the embodiments above, but may be altered by a skilled person within the scope of the claims. An embodiment based on a proper combination of technical means disclosed in different embodiments is encompassed in the technical scope of the present invention.

### INDUSTRIAL APPLICABILITY

The information recording apparatus and information reproducing apparatus of the present invention are applicable to the video disc recorder which carries out recording/reproduction with respect to the above optical disc, and are applicable to, for example, an apparatus which carries out recording/ reproduction of the stream data with respect to a hard disc or a semiconductor memory. Moreover, for example, they are applicable to recording/reproducing processes with respect to the recording medium in a terminal apparatus, such as a PC.

## Claims

1. An information recording apparatus including a recording section which records information on a recording medium, the information recording apparatus comprising:
data recording control means for controlling recording, on the recording medium, of stream data composed of plural pieces of partial data; and
table recording control means for controlling recording, on the recording medium, of tables each showing a combination of (i) a reproducing time list showing timings for reproducing respective pieces of the partial data and (ii) specific information for specifying the partial data corresponding to respective reproducing times in the reproducing time list,
in a case where the data recording control means controls recording, on the recording medium, of plural pieces of the stream data which pieces should be reproduced in sync with each other at least partially, the table recording control means controlling recording, on the recording medium, of the tables corresponding to respective pieces of the stream data in such a state that the reproducing time lists in the tables corresponding to at least two pieces of the stream data are identical with each other.

2. The information recording apparatus as set forth in claim 1, wherein in order that the reproducing time list in the table corresponding to one specific piece of the stream data is identical with the reproducing time list in the table corresponding to a remaining piece of the stream data, the table recording control means sets the reproducing time list in the table corresponding to the remaining piece of the stream data.

3. The information recording apparatus as set forth in claim 2, wherein when the table recording control means sets the table corresponding to the remaining piece of the stream data, it sets, in the table, specific information for specifying, as the partial data corresponding to the reproducing times, the partial data which should be reproduced around the respective reproducing times in the reproducing time list of the table.

4. The information recording apparatus as set forth in claim 1, further comprising data information recording control means for controlling recording, on the recording medium, of data information regarding the stream data,
in a case where the table recording control means carries out a process of causing the reproducing time lists to be identical with each other and sets the tables when recording one certain piece of the stream data, the data information recording control means putting, in the data information corresponding to the stream data, information indicating that the process of causing the reproducing time lists to be identical with each other has been carried out.

5. The information recording apparatus as set forth in claim 1, wherein when the table recording control means sets the table corresponding to the stream data which does not contain the partial data corresponding to one specific reproducing time in the reproducing time lists which are caused to be identical with each other, it sets, as the specific information corresponding to the reproducing time, information indicating that there is no corresponding partial data.

6. An information recording program causing a computer to realize respective means included in the information recording apparatus as set forth in any one of claims 1 to 5.

7. A computer-readable recording medium recording an information recording program causing a computer to realize respective means included in the information recording apparatus as set forth in any one of claims 1 to 5.

8. A recording medium recording:
stream data composed of plural pieces of partial data; and
tables each showing a combination of (i) a reproducing time list showing timings for reproducing respective pieces of the partial data and (ii) specific information for specifying the partial data corresponding to respective reproducing times in the reproducing time list,
in a case of recording plural pieces of the stream data which pieces should be reproduced in sync with each other at least partially, the tables corresponding to respective pieces of the stream data being recorded in such a state that the reproducing time lists in the tables corresponding to at least two pieces of the stream data are identical with each other.

9. An information recording method for recording information on a recording medium, comprising:
a data recording step of recording, on the recording medium, stream data composed of plural pieces of partial data; and
a table recording step of recording, on the recording medium, tables each showing a combination of (i) a reproducing time list showing timings for reproducing respective pieces of the partial data and (ii) specific information for specifying the partial data corresponding to respective reproducing times in the reproducing time list,
in a case of, in the data recording step, recording, on the recording medium, plural pieces of the stream data which pieces should be reproduced in sync with each other at least partially, the tables corresponding to respective pieces of the stream data being recorded in the table recording step in such a state that the reproducing time lists in the tables corresponding to at least two pieces of the stream data are identical with each other.

10. An information reproducing apparatus including a reproducing section which reproduces information recorded on a recording medium, the information reproducing apparatus comprising:
data reproducing control means for controlling readout, from the recording medium by the reproducing section, of stream data composed of plural pieces of partial data; and
table reproducing control means for controlling (I) readout, from the recording medium by the reproducing section, of tables each showing a combination of (i) a reproducing time list showing timings for reproducing respective pieces of the partial data and (ii) specific information for specifying the partial data corresponding to respective reproducing times in the reproducing time list, and (II) storing of the tables in a memory,
in a case where the data reproducing control means controls readout, from the recording medium, of plural pieces of the stream data which pieces should be reproduced in sync with each other at least partially, and when the table reproducing control means reads out the tables, corresponding to at least two pieces of the stream data, whose reproducing time lists are identical with each other, the table reproducing control means storing, in a memory, the reproducing time list corresponding to one piece of the stream data but not storing the reproducing time list corresponding to a remaining piece of the stream data.

11. An information reproducing method for reproducing information recorded on a recording medium, comprising:
a data reproducing step of reading out, from the recording medium, stream data composed of plural pieces of partial data; and
a table step of (I) reading out, from the recording medium, tables each showing a combination of (i) a reproducing time list showing timings for reproducing respective pieces of the partial data and (ii) specific information for specifying the partial data corresponding to respective reproducing times in the reproducing time list, and (II) storing the tables in a memory,
in a case of, in the data reproducing step, reading out, from the recording medium, plural pieces of the stream data which pieces should be reproduced in sync with each other at least partially, and when, in the table reproducing step, reading out the tables, corresponding to at least two pieces of the stream data, whose reproducing time lists are identical with each other, the reproducing time list corresponding to one piece of the stream data being stored in a memory but the reproducing time list corresponding to a remaining piece of the stream data being not stored in the memory.

12. An information reproducing program causing a computer to realize respective means included in the information reproducing apparatus as set forth in claim 10.

13. A computer-readable recording medium recording an information reproducing program causing a computer to realize respective means included in the information reproducing apparatus as set forth in claim 10.
